# FASCICULE DE BREVET EUROPEEN

(11) **EP 2 323 825 B1**
(45) Date de publication et mention de la délivrance du brevet: **24.09.2014**
(21) Numéro de dépôt: 09766085.6
(22) Date de dépôt: 17.06.2009
(51) Int. Cl.: B29C 33/38, B29C 33/54

(54) **PROCEDE DE REALISATION D'UN NOYAU COMPRENANT UNE ENVELOPPE CONTENANT DES PRODUITS GRANULEUX ET/OU PULVERULENTS, DISPOSITIF ET NOYEAU OBTENU.**
VERFAHREN ZUR HERSTELLUNG EINES KERNS MIT EINER HÜLLE BEINHALTEND GRANULAT- UND/ODER PULVERFÖRMIGE PRODUKTE, VORRICHTUNG UND HERGESTELLTER KERN.
PROCESS FOR MANUFACTURING A CORE HAVING AN EVELOPE CONTAINING GRANULAR AND/OR POWDER PRODUCTS, APPARATUS AND CORE OBTAINED.

(30) Priorité: 20.06.2008 FR 0854099
(43) Date de publication de la demande: 25.05.2011
(73) Titulaire: Airbus Opérations SAS, 31060 Toulouse (FR)
(72) Inventeur: LE HETET, Thomas, F - 44118 La Chevrolière (FR); MUSSEAU, Florian, F-44300 Nantes (FR); CAVALIERE, Frédérick, F-78180 Montigny Le Bretonneux (FR)
(74) Mandataire: Fantin, Laurent
(86) Numéro de dépôt international: PCT/FR2009/051152
(87) Numéro de publication internationale: WO 2009/153523

(56) Documents cités:
- WO-A-2008/003768
- DE-A1-102005 056 420
- JP-A- 61 202 827

## Description

La présente invention se rapporte à un procédé de réalisation d'un noyau comprenant une enveloppe contenant des produits granuleux et/ou pulvérulents. Un tel procédé est connu du document DE 10 2005 056420 A1.

La réalisation de certaines pièces comportant une cavité ouverte impose l'utilisation d'un noyau.

Selon une première variante décrite dans le document FR-2.576.546, le noyau est réalisé en une matière hydrosoluble, par exemple à partir d'un agglomérat de sable et d'un liant constitué d'une résine formophénolique polymérisée avec un durcisseur tel qu'un diisocyanate, en présence d'un catalyseur tel qu'une amine, de préférence liquide.

Le mélange de sable et de liant est versé dans un moule pour être en suivant cuit. Ce type de noyau est notamment utilisé pour la fabrication de pièces en matériau composite comportant une cavité ouverte, le noyau étant intercalé entre deux parties jusqu'à la polymérisation. Après la polymérisation de la pièce autour du noyau, ce dernier est désagrégé au moyen d'un solvant organique.

Ce mode opératoire n'est pas satisfaisant car l'homogénéité du noyau et ses caractéristiques dimensionnelles sont étroitement liées à la dextérité de l'opérateur chargé du remplissage manuel du moule.

Par rebond, la non reproductibilité des principales caractéristiques du noyau, conduit à ne pas maitriser les caractéristiques dimensionnelles de la pièce à réaliser en utilisant le noyau.

Aussi, la présente invention vise à pallier aux inconvénients de l'art antérieur en proposant un procédé de réalisation reproductible d'un noyau permettant de maîtriser les caractéristiques dimensionnelles de la pièce réalisée en utilisant le noyau.

A cet effet, l'invention a pour objet un procédé de réalisation d'un noyau susceptible d'être utilisé pour la fabrication d'une pièce en matériau composite, ledit noyau étant constitué d'au moins un produit pulvérulent et/ou granuleux, consistant à introduire ledit au moins un produit pulvérulent et/ou granuleux en le vibrant dans une enveloppe externe placée dans un outillage comportant une cavité délimitée par une paroi dont la géométrie est adaptée à celle du noyau à réaliser et à plaquer ladite enveloppe externe contre ladite paroi, caractérisé en ce qu'on émet des vibrations légèrement au dessus du niveau de remplissage au cours du remplissage.

D'autres caractéristiques et avantages ressortiront de la description qui va suivre de l'invention, description donnée à titre d'exemple uniquement, en regard des dessins annexés sur lesquels :
- la figure 1 est une vue en coupe selon la ligne I-I de la figure 2 d'un moule permettant de réaliser un noyau selon l'invention, et
- la figure 2 est une vue latérale d'un dispositif pour la mise en oeuvre du procédé selon l'invention.

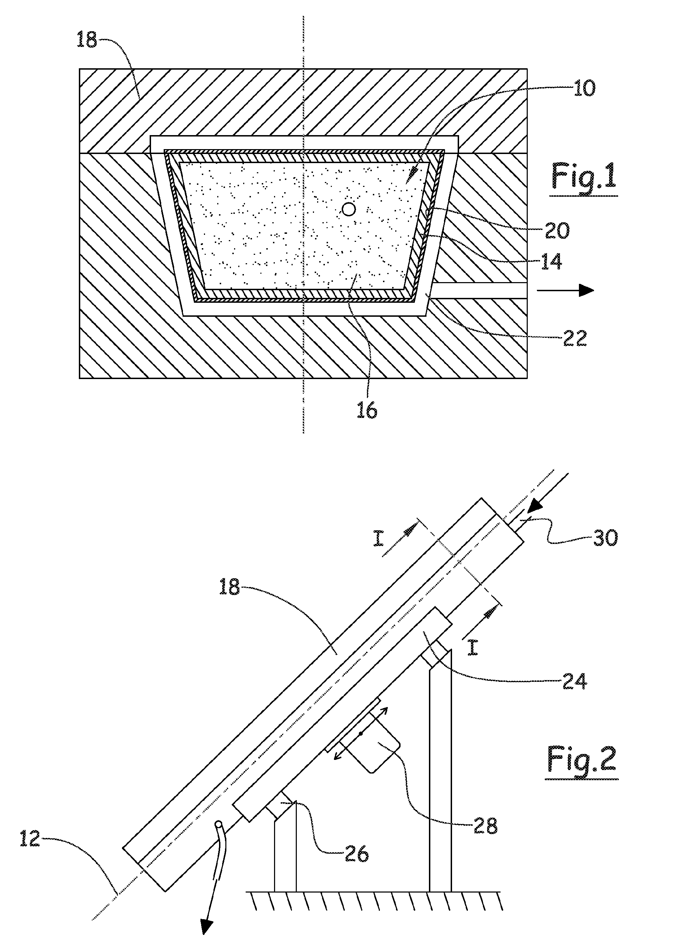

Sur la figure 1, on a représenté en 10 un noyau. A titre d'exemple, le noyau a une section constante, par exemple en forme de trapèze, et s'étend selon une direction longitudinale matérialisée par l'axe 12. Cependant, l'invention n'est pas limitée à cette géométrie.

Selon une application, ce noyau 10 peut être utilisé pour fabriquer une pièce en matériau composite et être intercalé entre un panneau et un raidisseur en forme d'Oméga afin de garantir la géométrie du raidisseur après polymérisation. Comme pour la géométrie du noyau, l'invention n'est pas limitée à cette application.

Selon l'invention, le noyau 10 comprend une enveloppe externe 14 contenant un matériau de remplissage 16 formant le coeur du noyau.

De préférence, l'enveloppe externe 14 est en un matériau souple et étanche, par exemple en silicone.

Le matériau de remplissage 16 est constitué d'au moins un produit pulvérulent et/ou granuleux. A titre d'exemple, des microbilles constituent le matériau de remplissage 16. Cependant, d'autres matériaux peuvent être envisagés.

Selon l'invention, le noyau 10 est réalisé à partir d'un outillage 18 comportant une cavité délimitée par une paroi 20 dont la géométrie est adaptée à celle du noyau à réaliser. Selon les variantes, le moule 18 peut comprendre une ou plusieurs parties, deux parties selon l'exemple illustré sur la figure 1.

Le procédé de l'invention se caractérise en ce qu'il consiste à plaquer l'enveloppe externe 14 contre la paroi 20 de la cavité de l'outillage puis à insérer dans ladite enveloppe le matériau de remplissage 16 en le vibrant.

Le fait de plaquer l'enveloppe externe 14 permet de maitriser les formes externes du noyau ( section et longueur) et de réaliser de manière reproductible les noyaux.

Le fait de vibrer le matériau de remplissage 16 en cours de remplissage permet d'obtenir un noyau homogène et d'obtenir un remplissage optimisé de manière reproductible.

Selon un mode de réalisation, l'enveloppe externe 14 est plaquée contre la paroi 20 grâce à un réseau de vide périphérique 22 qui génère une différence de pression de part et d'autre de l'enveloppe. A cet effet, la paroi 20 est poreuse, microperforée ou perforée.

Les formes et dimensions du réseau de vide périphérique 22 sont ajustées par l'homme du métier de manière à obtenir un plaquage satisfaisant de l'enveloppe externe 14 contre la paroi 20 du moule.

L'outillage 18 est incliné de manière à obtenir un remplissage par gravité progressif. A cet effet, l'outillage 18 est positionné sur un support 24 dont l'inclinaison est ajustable, notamment l'angle formé par la direction longitudinale 12 et la direction horizontale.

De préférence, le support 24 et l'outillage 18 sont montés sur des moyens 26 pour limiter la propagation de vibrations, par exemple des silentblocs.

Le support 24 n'est pas plus détaillé car il est à la portée de l'homme du métier. Au moins une source de vibrations 28 est reliée au support 24 ou à l'outillage 18. Selon l'invention, les vibrations sont émises légèrement au dessus du niveau de remplissage au cours du remplissage. Cette caractéristique permet d'optimiser le remplissage.

Selon une première variante, une source de vibrations 28 est reliée au support 24 et peut coulisser le long dudit support 24 selon la direction longitudinale 12, en suivant le niveau de remplissage. De préférence, la source de vibrations 28 se translate de manière à rester toujours légèrement au dessus du niveau de remplissage. Cette configuration permet d'obtenir une organisation optimisée du matériau de remplissage et un remplissage homogène.

Selon une autre variante, plusieurs sources de vibrations 28 sont reliées au support 24 et réparties de manière uniforme selon la direction longitudinale 12. Dans ce cas, les sources de vibrations 28 fonctionnent par secteur, les sources de vibrations 28 situées sous le niveau de remplissage n'émettant plus de vibrations au fur et à mesure de l'élévation du niveau de remplissage. Avantageusement, seule la ou les sources de vibrations 28 situées juste au dessus du niveau de remplissage émet(tent) des vibrations, les autres étant mises en marche ou éteintes au fur et à mesure du remplissage.

Ce principe de fonctionnement des sources de vibrations permet d'obtenir une organisation optimisée du matériau de remplissage 16 et un remplissage homogène.

Le matériau de remplissage 16 est inséré dans l'enveloppe externe 14 par gravité via une extrémité 30 de l'outillage, en utilisant éventuellement un entonnoir.

Selon une autre caractéristique de l'invention, la ou les source(s) de vibrations émet(tent) des vibrations à des fréquences comprises entre 20 et 150 Hz. De préférence, les fréquences sont supérieures à 50 Hz de manière à réduire l'impact des vibrations sur l'outillage. A titre d'exemple, les vibrations ont une fréquence de l'ordre de 70 Hz pour un matériau de remplissage sous forme de billes de 1 mm de diamètre avec un outillage incliné à 25° et de 1,7 m de longueur. Les caractéristiques des vibrations (amplitude et fréquence) sont ajustées en fonction de l'outillage, notamment de sa longueur, de son inclinaison et du matériau de remplissage afin d'obtenir le meilleur taux de remplissage.

Ce taux de remplissage est également fonction de l'inclinaison de l'outillage, le taux de remplissage étant d'autant meilleur que l'outillage est incliné. Cependant, plus l'outillage est long et incliné et plus le taux de remplissage varie d'un bout à l'autre du noyau en raison de la pression due à la colonne du matériau de remplissage et de la compression en partie inférieure de l'enveloppe externe 14. Avantageusement, l'outillage est incliné de l'ordre de 45° pour obtenir un bon compromis.

## Revendications

1. Procédé de réalisation d'un noyau susceptible d'être utilisé pour la fabrication d'une pièce en matériau composite, ledit noyau étant constitué d'au moins un produit pulvérulent et/ou granuleux (16), consistant à introduire ledit au moins un produit pulvérulent et/ou granuleux (16) en le vibrant dans une enveloppe externe (14) placée dans un outillage (18) comportant une cavité délimitée par une paroi (20) dont la géométrie est adaptée à celle du noyau à réaliser et à plaquer ladite enveloppe externe (14) contre ladite paroi (20), **caractérisé en ce qu'**on émet des vibrations légèrement au dessus du niveau de remplissage au cours du remplissage.

2. Procédé de réalisation d'un noyau selon la revendication 1, **caractérisé en ce qu'**il consiste à utiliser une source de vibrations et à la déplacer de manière à la positionner légèrement au-dessus du niveau de remplissage.

3. Procédé de réalisation d'un noyau selon la revendication 1, **caractérisé en ce qu'**il consiste à utiliser plusieurs sources de vibrations (28), les sources de vibrations (28) situées sous le niveau de remplissage n'émettant plus de vibrations au fur et à mesure de l'élévation du niveau de remplissage.

4. Procédé de réalisation d'un noyau selon l'une quelconque des revendications 1 à 3, **caractérisé en ce qu'**il consiste à incliner l'outillage (18) lors du remplissage.

5. Procédé de réalisation d'un noyau selon la revendication 4, **caractérisé en ce que** l'outillage (18) est incliné à 45°.

6. Procédé de réalisation d'un noyau selon l'une quelconque des revendications 1 à 5, **caractérisé en ce qu'**on émet des vibrations avec des fréquences comprises entre 20 et 150 Hz.

7. Dispositif de réalisation d'un noyau susceptible d'être utilisé pour la fabrication d'une pièce en matériau composite, ledit noyau étant constitué d'au moins un produit pulvérulent et/ou granuleux (16), ledit dispositif comprenant un outillage (18) comportant une cavité délimitée par une paroi (20) dont la géométrie est adaptée à celle du noyau à réaliser et des moyens pour plaquer une enveloppe externe (14) dans laquelle est introduit ledit au moins un produit pulvérulent et/ou granuleux (16) de manière à former ledit noyau, **caractérisé en ce qu'**il comprend des moyens pour émettre des vibrations légèrement au dessus du niveau de remplissage au cours du remplissage.

8. Dispositif de réalisation d'un noyau selon la revendication 7, **caractérisé en ce qu'**il comprend une source de vibrations et des moyens pour faire déplacer ladite source de manière à la positionner légèrement au dessus du niveau de remplissage au cours du remplissage.

9. Dispositif de réalisation d'un noyau selon la revendication 7, **caractérisé en ce qu'**il comprend plusieurs sources de vibrations (28), les sources de vibrations (28) situées sous le niveau de remplissage n'émettant plus de vibrations au fur et à mesure de l'élévation du niveau de remplissage.

## Patentansprüche

1. Verfahren zur Herstellung eines zur Verwendung bei der Herstellung eines Teils aus Verbundmaterial geeigneten Kerns, wobei der Kern aus wenigstens einem pulverförmigen und/oder körnigen Produkt (16) besteht und wobei das Verfahren darin besteht, das wenigstens eine pulverförmige und/oder körnige Produkt (16) einzubringen und es in einer externen Hülle (14) vibrieren zu lassen, die in einem Werkzeug (18) angeordnet ist, das einen von einer Wand (20) begrenzten Hohlraum aufweist, dessen Geometrie an die des herzustellenden Kerns angepasst ist und dazu eingerichtet ist, die äußere Hülle (14) an der Wand (20) anzulegen, **dadurch gekennzeichnet, dass** die Vibrationen während des Füllvorgangs leicht oberhalb der Füllhöhe emittiert werden.

2. Verfahren zur Herstellung eines Kerns nach Anspruch 1, **dadurch gekennzeichnet, dass** dieses darin besteht, eine Vibrationsquelle zu verwenden und deren Ort derart zu verändern, dass diese leicht oberhalb der Füllhöhe positioniert ist.

3. Verfahren zur Herstellung eines Kerns nach Anspruch 1, **dadurch gekennzeichnet, dass** dieses darin besteht, mehrere Vibrationsquellen (28) zu verwenden, wobei die sich unterhalb der Füllhöhe befindenden Vibrationsquellen (28) je nach Höhe des Füllstands keine Vibrationen mehr emittieren.

4. Verfahren zur Herstellung eines Kerns nach einem der Ansprüche 1 bis 3, **dadurch gekennzeichnet, dass** dieses darin besteht, das Werkzeug (18) während des Füllvorgangs zu neigen.

5. Verfahren zur Herstellung eines Kerns nach Anspruch 4, **dadurch gekennzeichnet, dass** das Werkzeug (18) um 45° geneigt ist.

6. Verfahren zur Herstellung eines Kerns nach einem der Ansprüche 1 bis 5, **dadurch gekennzeichnet, dass** Vibrationen mit Frequenzen zwischen 20 und 150 Hz emittiert werden.

7. Vorrichtung zur Herstellung eines zur Verwendung bei der Herstellung eines Teils aus Verbundmaterial geeigneten Kerns, wobei der Kern aus wenigstens einem pulverförmigen und/oder körnigen Produkt (16) besteht und wobei die Vorrichtung ein Werkzeug (18) aufweist, das über einen durch eine Wand (20) begrenzten Hohlraum verfügt, dessen Geometrie an die des herzustellenden Kerns angepasst ist, und über Mittel, um eine äußere Hülle (14) anzulegen, in die das wenigstens eine pulverförmige und/oder körnige Produkt (16) eingebracht ist, um den Kern zu formen, **dadurch gekennzeichnet, dass** diese Mittel aufweist, um während des Füllvorgangs Vibrationen leicht oberhalb des Füllstandes zu emittieren.

8. Vorrichtung zur Herstellung eines Kerns nach Anspruch 7, **dadurch gekennzeichnet, dass** diese eine Vibrationsquelle und über Mittel verfügt, um den Ort der Quelle derart zu verändern, dass diese während des Füllvorgangs leicht oberhalb des Füllstandes positioniert sind.

9. Vorrichtung für die Herstellung eines Kerns nach Anspruch 7, **dadurch gekennzeichnet, dass** diese mehrere Vibrationsquellen (28) aufweist, wobei die sich unterhalb des Füllstandes befindenden Vibrationsquellen (28) je nach der Höhe des Füllstandes keine Vibrationen mehr emittieren.

## Claims

1. Process for the production of a core that can be used for the manufacturing of a part that is made of composite material, whereby said core consists of at least one powdered and/or granular product (16), consisting in introducing said at least one powdered and/or granular product (16) by vibrating it in an outer envelope (14) placed in a device (18) that comprises a cavity that is delimited by a wall (20) whose geometry is adapted to that of the core to be produced and flattening said outer envelope (14) against said wall (20), **characterized in that** vibrations are emitted slightly above the fill level during filling.

2. Process for the production of a core according to Claim 1, wherein it consists in using a source of vibrations and in moving it in such a way as to position it slightly above the fill level.

3. Process for the production of a core according to Claim 1, wherein it consists in using several sources of vibrations (28), whereby the sources of vibrations (28) that are located below the fill level no longer emit vibrations as the fill level rises.

4. Process for the production of a core according to any of Claims 1 to 3, wherein it consists in inclining the device (18) during filling.

5. Process for the production of a core according to Claim 4, wherein the device (18) is inclined at 45°.

6. Process for the production of a core according to any of Claims 1 to 5, wherein vibrations are emitted with frequencies of between 20 and 150 Hz.

7. Device for the production of a core that can be used for the manufacturing of a part that is made of composite material, whereby said core consists of at least one powdered and/or granular product (16), whereby said device comprises a device (18) that comprises a cavity that is delimited by a wall (20) whose geometry is adapted to that of the core that is to be produced and means for flattening an outer envelope (14) into which is introduced said at least one powdered and/or granular product (16) in such a way as to form said core, wherein it comprises means for emitting vibrations slightly above the fill level during filling.

8. Device for the production of a core according to Claim 7, wherein it comprises a source of vibrations and means for moving said source in such a way as to position it slightly above the fill level during filling.

9. Device for the production of a core according to Claim 7, wherein it comprises several sources of vibrations (28), whereby the sources of vibrations (28) that are located below the fill level no longer emit vibrations as the fill level rises.
